# DEMANDE DE BREVET EUROPEEN

(11) **EP 3 826 304 A2**
(43) Date de publication de la demande: **26.05.2021**
(21) Numéro de dépôt: 20208406.7
(22) Date de dépôt: 18.11.2020
(51) Int. Cl.: H04N 19/14, G06T 7/10, H04N 19/17, H04N 19/182, H04N 19/46, H04N 19/85

(54) **PROCÉDÉ ET DISPOSITIF DE COMPRESSION D'IMAGES NUMÉRIQUES ET PROCÉDÉ ET DISPOSITIF DE DÉCOMPRESSION ASSOCIÉS**

(30) Priorité: 19.11.2019 FR 1912886
(71) Demandeur: THALES, 92400 Courbevoie (FR)
(72) Inventeur: LE BARZ, Cédric, 91767 PALAISEAU CEDEX (FR); BERGERON, Cyril, 92622 GENNEVILLIERS CEDEX (FR); HAUGEARD, Jean-Emmanuel, 91767 PALAISEAU CEDEX (FR)
(74) Mandataire: Lavoix

(57) **Abrégé**

L'invention concerne un procédé de compression d'images numériques, une image numérique initiale à compresser étant définie par au moins une matrice de pixels ayant des valeurs numériques associées, ainsi qu'un procédé de décompression associé et des dispositifs associés. Le procédé de compression comporte des étapes, mises en œuvre un processeur, d'application d'une segmentation sémantique (60) à l'image numérique initiale (20), permettant d'obtenir une image segmentée dans laquelle chaque pixel est associé à une classe sémantique parmi un ensemble de classes sémantiques prédéterminé préalablement mémorisé, suivie d'une obtention (62) d'une image à coder à partir de ladite image segmentée, et d'une compression (64) de l'image à coder pour obtenir un train binaire (30).

## Description

La présente invention concerne un procédé de compression d'images numériques et un procédé de décompression associé. Elle concerne également des dispositifs et des programmes d'ordinateur associés.

L'invention se situe dans le domaine de la compression d'images numériques fixes ou des vidéos comprenant des successions d'images numériques, et trouve une application privilégiée dans le domaine de la compression très bas débit.

De manière connue, les images numériques sont représentées par des échantillons appelés pixels, ordonnés selon des matrices et ayant des valeurs numériques associées. Sans compression, chaque pixel est codé sur un nombre de bits, par exemple de 8 bits à 32 bits par pixel. La quantité de bits nécessaire pour une telle représentation d'images numériques est trop grande pour être compatible avec des exigences matérielles de mémorisation ou de transmission sur des réseaux de communication des images numériques.

De nombreuses technologies de compression/décompression d'images numériques et de vidéos ont été mises au point pour diminuer la quantité de bits (ou débit) nécessaire pour représenter les images et vidéos.

Parmi les standards de compression d'images et de vidéos les plus connus, on peut citer: MPEG-2, standard ISO/CEI 13818-2 ; H264 ou MPEG-4 Part 10, Advanced Video Coding (MPEG-4 AVC), standard ISO-14496 part 10 ou ITU-T H.264 ; H265 ou MPEG-4 HEVC (« *High Efficiency Video Coding* »), standard ISO/CEI 23008-2. Pour la compression d'images fixes, on connaît notamment les standards de compression JPEG, standard ISO/IEC 10918 (1992) et JPEG 2000, standard ISO/CEI 15444-1.

Ces technologies de compression sont conçues pour maximiser la qualité des images pour un débit cible, et/ou pour minimiser le débit étant donnée une qualité cible.

La qualité est mesurée via un critère de ressemblance entre l'image numérique initiale et l'image numérique obtenue après compression et décompression. Par exemple, un critère classiquement utilisé est la mesure PSNR (« peak signal to noise ratio »). A très bas débit, par exemple pour un débit inférieur à 100kbit/s pour un flux d'images de définition 640x480 à 25 images par seconde le critère classique d'optimisation de la qualité, basé sur des mesures de qualité calculatoires comme le PSNR, aboutit à des images difficilement interprétables par un observateur humain.

Pour certaines applications la bande passante des canaux de communication attribuable à la transmission d'images ou de vidéos est très faible, mais il est critique d'obtenir des images compréhensibles et exploitables.

L'invention a pour objet de remédier aux inconvénients de l'état de la technique en proposant un procédé de compression, et un procédé de décompression associé, ainsi que des dispositifs associés, permettant d'obtenir des images ou vidéos qui demeurent interprétables par un opérateur humain, tout en étant compressées à très bas débit.

A cet effet, l'invention propose un procédé de compression d'images numériques, une image numérique initiale à compresser étant définie par au moins une matrice de pixels ayant des valeurs numériques associées, le procédé étant mis en oeuvre par un dispositif programmable de compression comportant au moins un processeur et une mémoire électronique. Le procédé comporte des étapes, mises en œuvre par ledit processeur, de:
- application d'une segmentation sémantique à l'image numérique initiale, permettant d'obtenir une image segmentée dans laquelle chaque pixel est associé à une classe sémantique parmi un ensemble de classes sémantiques prédéterminé préalablement mémorisé,
- obtention d'une image à coder à partir de ladite image segmentée,
- compression de l'image à coder et obtention d'un train binaire.

Avantageusement, l'invention propose l'application d'une segmentation sémantique suivie d'une compression d'une image à coder obtenue à partir de l'image segmentée. Avantageusement, les classes sémantiques associées aux pixels de l'image segmentée sont codées, ce qui facilite la compréhension par un opérateur.

Le procédé de compression d'images selon l'invention peut également présenter une ou plusieurs des caractéristiques ci-dessous, prises indépendamment ou selon toutes les combinaisons techniquement envisageables.

L'application d'une segmentation sémantique comprend l'application d'un algorithme d'apprentissage profond à base de réseaux de neurones.

Le procédé comporte en outre une segmentation complémentaire appliquée à l'image numérique initiale, et une fusion entre l'image segmentée par l'application d'une segmentation sémantique et l'image segmentée par ladite segmentation complémentaire, le résultat de la fusion étant utilisé pour l'obtention de l'image à coder.

La segmentation complémentaire est une segmentation basée contours.

L'obtention d'une image à coder comporte l'attribution d'une même valeur numérique de codage à tous les pixels de l'image segmentée appartenant à une même classe sémantique.

Pour au moins un sous-ensemble de pixels appartenant à une même classe sémantique, la valeur numérique initiale des pixels spatialement correspondants de l'image numérique initiale est recopiée de l'image numérique initiale dans l'image à coder.

Selon un autre aspect, l'invention concerne un procédé de décompression d'images numériques compressées par un procédé de compression tel que brièvement décrit ci-dessus, mis en œuvre par un dispositif programmable de décompression comportant au moins un processeur et une mémoire électronique. Le procédé comporte des étapes mises en œuvre par ledit processeur, de réception d'un train binaire et décompression dudit train binaire pour obtenir une image numérique décodée, comportant au moins un ensemble de pixels de même valeur associée à une classe sémantique parmi un ensemble de classes sémantiques prédéterminé préalablement mémorisé.

Le procédé de décompression d'images selon l'invention peut également présenter une ou plusieurs des caractéristiques ci-dessous, prises indépendamment ou selon toutes les combinaisons techniquement envisageables.

Il comporte une mise en correspondance entre des valeurs de pixels de l'image numérique décodée et des classes sémantiques, et un affichage informatif des classes sémantiques associées à l'image numérique décodée.

Le procédé de décompression comporte en outre une étape de rendu d'image décodée texturée, dans laquelle, pour au moins un sous-ensemble de pixels associés à une classe sémantique, une attribution de nouvelles valeurs numériques aux pixels dudit sous-ensemble est effectuée en fonction de ladite classe sémantique.

L'étape de rendu d'image décodée texturée met en œuvre un algorithme de génération d'images basé sur des réseaux de neurones.

Selon un autre aspect, l'invention concerne un dispositif de compression d'images numériques, une image numérique initiale à compresser étant définie par au moins une matrice de pixels ayant des valeurs numériques associées, le dispositif de compression étant un dispositif programmable comportant au moins un processeur et une mémoire électronique. Le processeur du dispositif de compression est configuré pour mettre en œuvre :
- un module de segmentation sémantique configuré pour appliquer une segmentation sémantique à l'image numérique initiale, permettant d'obtenir une image segmentée dans laquelle chaque pixel est associé à une classe sémantique parmi un ensemble de classes sémantiques prédéterminé préalablement mémorisé,
- un module d'obtention d'une image à coder à partir de ladite image segmentée,
- un module de compression de l'image à coder et d'obtention d'un train binaire.

Le dispositif de compression d'images numériques selon l'invention est configuré pour mettre en œuvre un procédé de compression d'images numériques tel que brièvement décrit ci-dessus.

Selon un autre aspect, l'invention concerne un dispositif de décompression d'images numériques d'images numériques compressées par un dispositif de compression d'images numériques tel que brièvement décrit ci-dessus, ledit dispositif de décompression étant un dispositif programmable comportant au moins un processeur et une mémoire électronique. Le processeur du dispositif de décompression est configuré pour mettre en œuvre un module de réception d'un train binaire et un module de décompression configuré pour appliquer un algorithme de décompression dudit train binaire pour obtenir une image numérique décodée, comportant au moins un ensemble de pixels de même valeur associée à une classe sémantique parmi un ensemble de classes sémantiques prédéterminé préalablement mémorisé.

Le dispositif de décompression d'images numériques selon l'invention est configuré pour mettre en œuvre un procédé de décompression tel que brièvement décrit ci-dessus.

Selon un autre aspect, l'invention concerne un support d'enregistrement d'informations, sur lequel sont mémorisées des instructions logicielles pour l'exécution d'un procédé de compression d'images numériques tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en œuvre par un dispositif électronique programmable, mettent en œuvre un procédé de compression d'images numériques tel que brièvement décrit ci-dessus.

Selon un autre aspect, l'invention concerne un support d'enregistrement d'informations, sur lequel sont mémorisées des instructions logicielles pour l'exécution d'un procédé de décompression d'images numériques tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en œuvre par un dispositif électronique programmable, mettent en œuvre un procédé de décompression d'images numériques tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un synoptique d'un système mettant en œuvre des dispositifs de compression et de décompression selon l'invention ;
[Fig 2] la figure 2 représente schématiquement une image numérique initiale à compresser ;
[Fig 3] la figure 3 représente schématiquement une image segmentée par une segmentation sémantique de l'image numérique de la figure 2 ;
[Fig 4] la figure 4 est un synoptique des principales étapes d'un procédé de compression selon un premier mode de réalisation de l'invention ;
[Fig 5] la figure 5 est un synoptique des principales étapes d'un procédé de compression selon un deuxième mode de réalisation de l'invention ;
[Fig 6] la figure 6 est un synoptique des principales étapes d'un procédé de décompression selon un mode de réalisation de l'invention.

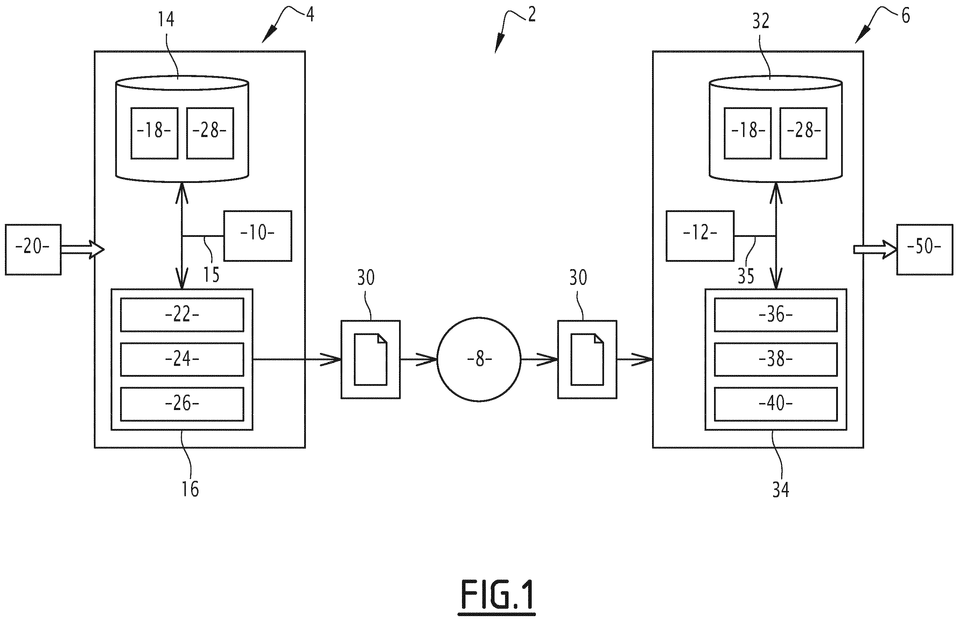

La figure 1 est un synoptique d'un système 2 de compression/décompression d'images numériques ou de vidéos selon l'invention.

Le système 2 comporte un dispositif de compression 4, et un dispositif de décompression 6, qui sont des dispositifs électroniques programmables, par exemple des ordinateurs.

Dans un mode de réalisation, les dispositifs de compression 4 et de décompression 6 sont distants, et sont adaptés à communiquer via un réseau de télécommunications 8, qui est par exemple un réseau de télécommunications radio. Chacun des dispositifs 4, 6 comporte un module de transmission/réception 10, 12, adapté à communiquer des données formatées selon un protocole de communication prédéterminé, adapté pour la communication via le réseau de télécommunications 8.

Le dispositif de compression 4 comporte également une mémoire électronique 14, adaptée à mémoriser des données sous forme de fichiers ou de registres par exemple, et une unité de calcul 16, qui est par exemple un processeur, apte à exécuter des calculs et des instructions de code de programme d'ordinateur lorsque le dispositif 4 est mis sous tension. Les éléments 10, 14, 16 du dispositif de compression sont adaptés à communiquer via des bus de communication 15.

Une image numérique initiale 20, qui est à compresser, est fournie en entrée du dispositif de compression 4. L'image numérique initiale 20 est soit une image fixe, par exemple issue d'un capteur photographique, soit une image extraite d'une vidéo.

L'image numérique initiale 20, appelée simplement image initiale par la suite, est, dans un mode de réalisation, fournie sur un support d'enregistrement de données lisible par ordinateur.

De manière connue, l'image initiale 20 est composée d'une ou plusieurs matrices de pixels, et chaque pixel a une valeur associée, qui est codée sur un nombre prédéterminé de bits, par exemple 8 ou 32 bits.

Le processeur 16 du dispositif de compression 4 implémente un module de segmentation sémantique 22 permettant d'obtenir une image segmentée à partir de l'image initiale, un module 24 d'obtention d'une image à coder à partir de l'image segmentée et un module de compression 26 qui met en œuvre un algorithme de compression choisi. Ces modules seront décrits plus en détail ci-après. Les modules 22, 24, 26 mettent en œuvre un procédé de compression selon l'invention.

Des modes de réalisation du procédé de compression seront décrits en détails ci-après.

Les modules de segmentation sémantique 22, d'obtention d'une image à coder 24 et de compression 26 sont par exemple mis en œuvre par du logiciel, sous forme d'instructions de code de programme exécutables.

En variante, ces modules sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*).

Le module de segmentation sémantique 22 effectue une segmentation de l'image initiale en classes sémantiques parmi une pluralité de classes 18 mémorisées préalablement. De plus, une association entre des classes sémantiques et des valeurs numériques de codage attribuées aux pixels, par exemple sous forme de table 28, est également mémorisée dans la mémoire électronique 14 du dispositif de compression 4.

Le module d'obtention d'une image à coder 24 met en œuvre un prétraitement, à partir de l'image segmentée, et optionnellement de l'image initiale, pour obtenir une image à coder. Plusieurs modes de réalisation de ce module seront décrits ci-après.

Le module de compression 26 applique de préférence un standard de compression connu, par exemple un des standards MPEG-4 AVC, MPEG-4 HEVC. En variante, le module de compression 26 applique un procédé de compression propriétaire.

A l'issue de l'application du procédé de compression est obtenu un train binaire 30, par exemple mémorisé dans un fichier représentatif de l'image initiale en un format compressé associé au procédé de compression choisi.

Dans le mode de réalisation illustré, le fichier contenant la représentation compressée de l'image initiale (train binaire 30) est transmis, via le réseau de télécommunications 8, au dispositif de décompression 6.

Le dispositif de décompression 6 comporte également une mémoire électronique 32, adaptée à mémoriser des données sous forme de fichiers ou de registres par exemple, et une unité de calcul 34, qui est un processeur, apte à exécuter des calculs et des instructions de code de programme d'ordinateurs lorsque le dispositif 6 est mis sous tension. Les éléments 12, 32, 34 du dispositif de décompression sont adaptés à communiquer via des bus de communication 35.

Le train binaire 30 représentatif de l'image initiale en format compressé est fourni en entrée du dispositif de décompression 6.

Le processeur 34 du dispositif de décompression 6 implémente un module de décompression 36, programmé pour mettre en œuvre l'algorithme de décompression correspondant à l'algorithme de compression appliqué par le module 26 du dispositif de compression 4. Le processeur 34 implémente également un module 38 d'association de classes sémantiques à l'image obtenue par le module de décompression 36, et optionnellement un module 40 de rendu d'image décodée texturée, le rendu d'image comportant un ajout de textures sur au moins une partie de l'image obtenue par le module 38.

Les modules de décompression 36, d'association de classes sémantiques 38 et de rendu d'image 40 sont par exemple mis en œuvre par du logiciel, sous forme d'instructions de code de programme exécutables.

En variante, ces modules sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphics processing*), ou encore sous forme d'un circuit intégré dédié, tel qu'un ASIC (de l'anglais *Application Specific Integrated Circuit*).

Le module 38 d'association de classes sémantiques, et, optionnellement, le module 40 de rendu d'image utilisent des classes sémantiques parmi une pluralité de classes 18 mémorisée préalablement, ainsi qu'une association entre des classes sémantiques et des valeurs numériques de codage attribuées aux pixels, par exemple sous forme de table 28.

L'ensemble de classes sémantiques 18 et la table 28 sont par exemple mémorisées dans la mémoire électronique 32 du dispositif de décompression 6.

L'ensemble de classes sémantiques 18 et la table 28 sont partagées avec le dispositif de compression 4, par exemple elles sont enregistrées dans une phase d'installation préalable, ou transmises du dispositif de compression 4 au dispositif de décompression 6.

A l'issue de la mise en œuvre du procédé de décompression, une image numérique 50 décodée est obtenue. L'image numérique décodée 50 comprend avantageusement des informations sémantiques de l'image initiale 20.

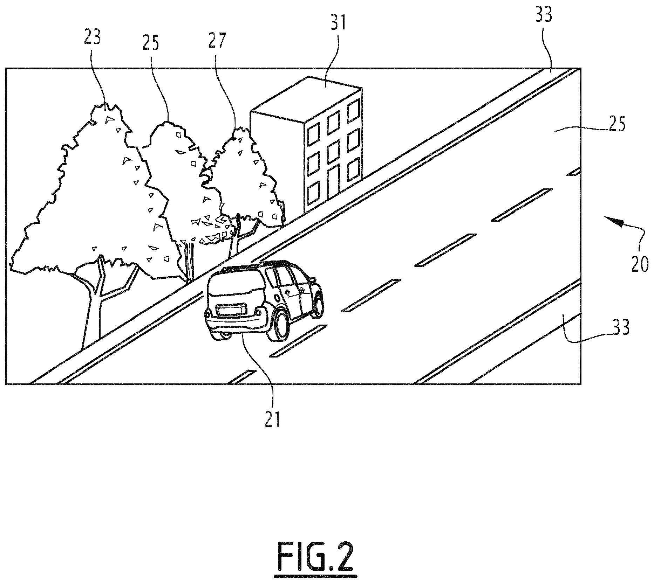

La figure 2 illustre schématiquement une image initiale 20 à compresser, qui est dans cet exemple une vue routière, où l'on voit un véhicule 21, des arbres 23, 25, 27, une route 29, un bâtiment 31. Dans une image naturelle, les éléments « véhicule », « arbres », « route » ont une représentation spécifique liée en particulier à la couleur et à la marque du véhicule, à l'essence des arbres et à la saison. Leur forme dans l'image dépend de l'angle de prise de vue, de la distance par rapport au capteur etc.

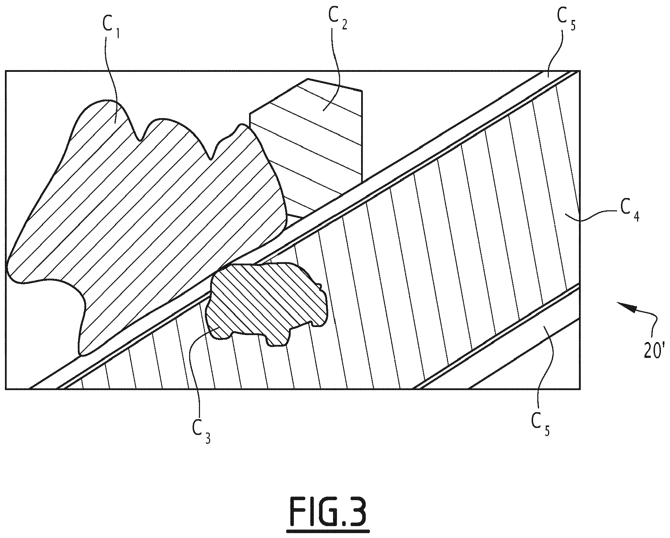

Grâce à l'application d'une segmentation sémantique, et comme illustré schématiquement à la figure 3, il est possible de classifier les éléments de l'image initiale dans des classes sémantiques, de manière automatique et sans intervention d'un opérateur humain. Ainsi, dans l'image segmentée 20' obtenue par application d'une segmentation sémantique à l'image initiale 20, les pixels de l'image sont associés à des classes sémantiques prédéterminées, par exemple : C1 pour les arbres, C2 pour les bâtiments, C3 pour les véhicules, C4 pour les routes, C5 pour les trottoirs.

Dans l'exemple simplifié illustré, chaque pixel de l'image segmentée est associé à une classe sémantique ou étiquette.

Dans un mode de réalisation, l'image à coder est formée en associant une même valeur numérique, dite valeur numérique de codage, à tous les pixels d'une même classe sémantique.

Par exemple, les pixels de la classe C1 ont une valeur V1=10, les pixels de la classe C2 ont une valeur V2=20, les pixels de la classe C3 ont une valeur V3=30, les pixels de la classe C4 ont une valeur V4=40, les pixels de la classe C5 ont une valeur V5=50. Pour faciliter l'interprétation, des zones hachurées correspondant aux classes sont représentées.

Avantageusement, le débit nécessaire pour coder une telle image à coder est en général faible.

Dans un mode de réalisation, en complément, l'image segmentée est améliorée par prétraitement, avec des informations additionnelles obtenues à partir de l'image initiale.

Selon une variante, dans l'image à coder obtenue à partir de l'image segmentée, au moins pour un sous-ensemble de pixels associés à une même classe sémantique, les valeurs initiales des pixels spatialement correspondants de l'image initiale sont conservées.

Par exemple, les valeurs des pixels de la classe C3 « véhicule » sont conservées, et les pixels des autres classes sémantiques de l'image prennent des valeurs numériques de codage prédéterminées en fonction de la classe sémantique associée, comme expliqué ci-dessus. Avantageusement, de l'information de l'image initiale est conservée et transmise au dispositif de décompression pour la ou les classe(s) sémantique(s) choisie(s).

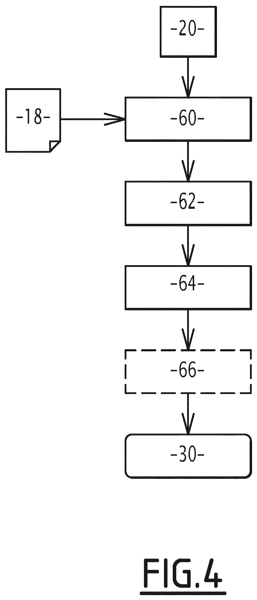

Un premier mode de réalisation du procédé de compression selon l'invention est décrit ci-après en référence à la figure 4.

Une image initiale 20, qui est l'image à compresser, est fournie en entrée du procédé.

Lors d'une étape de segmentation sémantique 60, un algorithme de segmentation sémantique est appliquée, permettant d'attribuer chaque pixel de l'image à une classe sémantique parmi un ensemble de classes sémantiques prédéterminé 18, qui est connu et mémorisé préalablement.

Par exemple, l'algorithme de segmentation sémantique est un algorithme d'apprentissage profond (en anglais « deep learning ») à base de réseaux de neurones, utilisant une base de données d'apprentissage comportant des images dont les classes sémantiques ont été préalablement annotées et mémorisées. Par exemple, un réseau de neurones de type Mask R-CNN tel que décrit dans l'article « Mask R-CNN » de Kaiming He et al, publié dans ICCV 2017, qui est une mise en œuvre particulière d'un réseau de neurones convolutionnel, est utilisé pour la segmentation sémantique.

A l'étape 62 d'obtention d'une image à coder, une valeur numérique de codage est attribuée à chaque pixel en fonction de la classe sémantique dans laquelle il a été classifié.

Dans un mode de réalisation, les étapes 60 et 62 sont regroupées en une seule étape.

En variante, à l'étape 62 les valeurs numériques de codage, qui sont associées aux classes sémantiques, sont choisies en fonction de l'image initiale ou de critères sémantiques. Par exemple, les valeurs numériques de codage sont attribuées en fonction du nombre de pixels par classe. Par exemple, pour la classe associée au plus grand nombre de pixels, c'est la valeur 0 qui est la valeur numérique de codage attribuée.

En variante, la valeur numérique de codage attribuée est associée à la classe sémantique, pour correspondre à une couleur choisie, par exemple coder la végétation en vert, les bâtiments en gris, les véhicules en rouge etc.

A l'étape 62 on applique une association entre des classes sémantiques et des valeurs numériques de codage, qui est par exemple mémorisée sous forme de table 28.

A l'issue de l'étape 62, une image numérique à coder est obtenue.

Cette image à coder est compressée à l'étape de compression 64, en appliquant un algorithme de compression choisi, par exemple selon un des standards MPEG-4 AVC, MPEG-4 HEVC.

Les paramètres de l'algorithme de compression sont par exemple choisis en fonction d'un débit cible.

Optionnellement, une étape 66 de transmission au dispositif de décompression de la table 28 d'association entre les classes sémantiques et des valeurs numériques de codage attribuées aux pixels est mise en œuvre. Dans un mode de réalisation, la table 28 est codée et transmise dans des métadonnées encodées en en-tête du train binaire 30.

Le train binaire 30 comprenant des données d'image compressées selon le format choisi est obtenu et mémorisé, par exemple dans un fichier de données compressées, et/ou transmis à un dispositif de décompression.

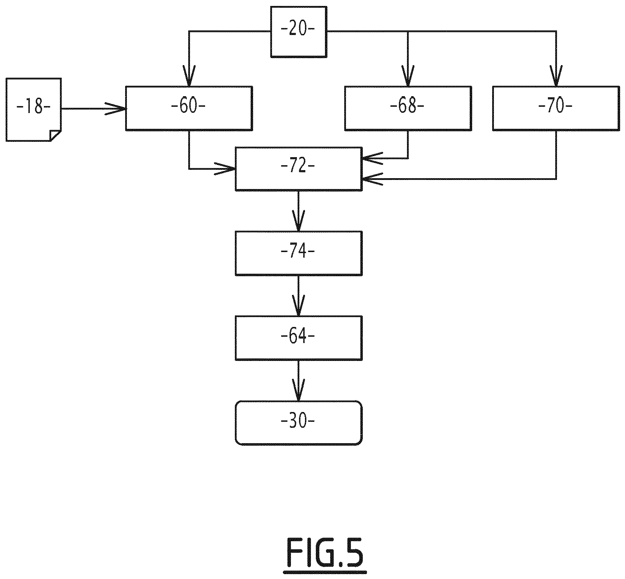

Un deuxième mode de réalisation du procédé de compression selon l'invention est décrit ci-après en référence à la figure 5.

Une image initiale 20, qui est l'image à compresser, est fournie en entrée du procédé.

Une étape 60 de segmentation sémantique, analogue à l'étape de segmentation sémantique décrite en référence à la figure 4, est mise en œuvre.

De plus, en parallèle ou pas de la segmentation sémantique, une extraction de gradients (étape 68) est appliquée à l'image initiale 20, par toute méthode d'extraction de gradients connue dans le domaine du traitement d'images numériques. Les gradients sont, de manière connue, représentatifs des hautes fréquences spatiales dans l'image initiale 20.

L'extraction de gradients fournit une image de gradients. Dans un mode de réalisation, l'image de gradients est binarisée en fonction d'une valeur de seuil prédéterminée, de manière à conserver les principaux gradients. Ces principaux gradients fournissent des informations relatives à des contours présents dans l'image, qui sont des informations additionnelles permettant d'améliorer l'interprétation d'une image observée.

De plus, en parallèle ou pas de la segmentation sémantique 60, une segmentation basée contours est réalisée à l'étape de segmentation complémentaire 70. Cette segmentation basée contours est par exemple effectuée par un algorithme de type superpixel, comme par exemple l'algorithme SLIC pour « Simple Linear Iterative Clustering ». Un superpixel est un ensemble de pixels adjacents.

En variante, tout autre algorithme de segmentation basé contours connu est utilisable à l'étape de segmentation complémentaire 70.

A l'issue de l'étape de segmentation complémentaire 70 est obtenue une image segmentée additionnelle.

Les étapes 60, 68 et 70 sont suivies d'une étape de fusion 72, permettant d'obtenir une image segmentée améliorée.

A l'étape de fusion 72, l'image segmentée issue de la segmentation sémantique est combinée avec l'image segmentée additionnelle issue de la segmentation basée contours.

Lors de cette combinaison, lorsque la segmentation basée contours est effectuée par l'algorithme SLIC, pour chaque superpixel, il est déterminé quelle est la classe sémantique majoritaire, c'est-à-dire la classe sémantique majoritairement associées aux pixels du superpixel. La classe sémantique majoritaire est alors attribuée à chaque pixel du superpixel dans l'image segmentée améliorée.

De plus, à l'étape de fusion 72, les principaux gradients obtenus à l'étape 68 sont ajoutés dans l'image segmentée améliorée. Par exemple, une valeur prédéterminée est attribuée à chaque pixel de l'image segmentée améliorée correspondant à une valeur de gradient dans l'image binarisée des gradients. Par exemple, la valeur prédéterminée est égale à 255 lorsque les valeurs des pixels sont codées sur 8 bits.

Selon une variante, seule l'une des étapes 68 ou 70 est mise en œuvre, et l'étape de fusion 72 est adaptée en conséquence.

Ensuite, une étape 74 de génération de l'image à coder est mise en œuvre.

De manière analogue à l'étape 62 décrite en référence à la figure 4, une valeur numérique de codage est attribuée à chaque pixel en fonction de la classe sémantique dans laquelle il a été classifié.

Si l'étape 68 d'extraction de gradients a été mise en œuvre, les pixels ayant une valeur prédéterminée de gradient sont préservés dans l'image à coder. Ainsi, l'image à coder comporte des informations additionnelles.

De plus, de manière optionnelle, dans au moins une partie de l'image segmentée, par exemple pour les pixels d'une même classe sémantique, la valeur initiale des pixels spatialement correspondants de l'image initiale est recopiée de l'image initiale dans l'image à coder.

Ainsi, l'image à coder obtenue est enrichie de données de l'image initiale (ou « image réelle »), tout en contenant des zones uniformes correspondant à des classes sémantiques. Cette image à coder dans ce mode de réalisation est appelée image à coder enrichie.

L'image à coder enrichie est ensuite compressée lors d'une étape de compression 64, déjà décrite ci-dessus en référence à la figure 4.

Un train binaire 30 comprenant des données compressées selon le format choisi est obtenu et mémorisé et/ou transmis à un dispositif de décompression.

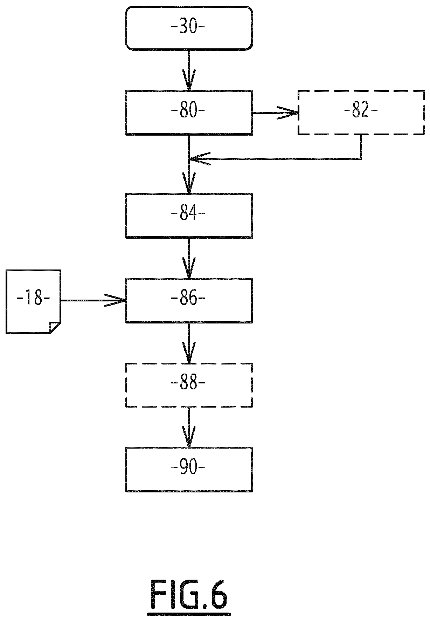

Un mode de réalisation du procédé de décompression selon l'invention est décrit ci-après en référence à la figure 6.

Un fichier comprenant un train binaire 30 de données d'image compressées est reçu en entrée.

Une première étape de décompression 80 est appliquée, mettant en œuvre un algorithme de décompression correspondant à l'algorithme de compression appliqué à l'étape de compression 64.

A l'issue de l'étape 80 est obtenue une image numérique décodée, qui est visualisable et contient des ensembles de pixels de même valeur analogues aux ensembles de pixels de l'image à coder.

De manière optionnelle, une étape 82 d'extraction d'une table 28 d'association entre des classes sémantiques et des valeurs numériques de codage attribuées aux pixels est mise en œuvre. La table 28 est par exemple extraite des métadonnées du train binaire 30 reçu, ou d'une mémoire du dispositif de décompression.

Une étape 84 de mise en correspondance entre valeurs des pixels et classes sémantiques est mise en œuvre. Par exemple, un affichage informatif des classes sémantiques, par exemple sous forme de légende, accompagne cette mise en correspondance.

Ensuite, une étape 86 de rendu d'image décodée texturée est mise en œuvre, pour au moins un ensemble de pixels de l'image numérique décodée de même valeur correspondant à une même classe sémantique.

Pour au moins un ensemble de pixels associée à une classe sémantique, des nouvelles valeurs sont attribuées aux pixels de cet ensemble en fonction de la classe sémantique associée.

Par exemple, un algorithme de génération d'images basé sur des réseaux de neurones, par exemple de type « Generative Adversarial Network », est mis en œuvre. L'étape 86 utilise des données préalablement obtenues lors d'une phase d'apprentissage.

Par exemple, pour une classe « arbre », une texture d'arbre sera générée. Cette texture correspond à la classe sémantique, mais dépend des données utilisées lors de l'apprentissage préalable appliqué dans le réseau de neurones. Il n'y a pas de reproduction fidèle du type de texture réellement présent dans l'image initiale, par exemple l'arbre initial est un chêne, mais l'image obtenue par le réseau de neurones à l'étape 86 est une image de châtaignier. Néanmoins, l'interprétation de l'image obtenue par un opérateur humain est largement facilitée.

Il est à noter que si l'image décodée à l'étape 80 comporte également une ou plusieurs zones contenant des valeurs de pixels décodées correspondant à l'image initiale, ou, dans d'autres termes, si une image à coder enrichie a été compressée, ces zones sont conservées.

L'image obtenue à l'issue de l'étape 86 est une image décodée texturée, qui est enrichie pour l'interprétation par un opérateur humain.

Lors d'une étape optionnelle 88 d'amélioration supplémentaire, lorsque l'image traitée fait partie d'un flux vidéo, l'image décodée enrichie obtenue à l'étape 86 est améliorée en remplaçant les pixels de certaines classes sémantiques par des valeurs de pixels recopiées d'une image préalablement reçue et décodée, et comprenant des valeurs décodées de la texture réelle de l'image initiale pour une classe sémantique donnée.

L'étape 88 d'amélioration supplémentaire est suivie d'une étape 90 d'affichage de l'image décodée enrichie, comprenant des textures correspondant aux classes sémantiques ou aux valeurs des pixels de l'image initiale.

Il est à noter également que si cela présente un intérêt pour une application, il est possible de modifier certaines classes sémantiques, par exemple remplacer « arbre » par « bâtiment », ou d'anonymiser certains objets de l'image. La modification peut être effectuée par exemple par le dispositif de compression lors de l'étape 62 de génération d'une image à coder, ou par le dispositif de décompression lors de l'étape 84 de mise en correspondance entre valeurs des pixels et classes sémantiques. Bien entendu, des variantes de mise en œuvre sont envisageables.

Avantageusement, le procédé de compression de l'invention permet d'obtenir des données compressées à très bas débit, qui permettent d'obtenir ensuite, par le procédé de décompression, des images exploitables et compréhensibles par un opérateur humain, grâce à la segmentation sémantique.

## Revendications

1. Procédé de compression d'images numériques, une image numérique initiale à compresser étant définie par au moins une matrice de pixels ayant des valeurs numériques associées, le procédé étant mis en œuvre par un dispositif programmable de compression (4) comportant au moins un processeur (16) et une mémoire électronique (14), **caractérisé en ce qu'**il comporte des étapes, mises en œuvre par ledit processeur (16), de:
- application d'une segmentation sémantique (60) à l'image numérique initiale (20), permettant d'obtenir une image segmentée dans laquelle chaque pixel est associé à une classe sémantique parmi un ensemble de classes sémantiques (18) prédéterminé préalablement mémorisé,
- obtention (62, 68-72) d'une image à coder à partir de ladite image segmentée,
- compression (64) de l'image à coder et obtention d'un train binaire (30).

2. Procédé de compression selon la revendication 1, dans lequel l'application (60) d'une segmentation sémantique comprend l'application d'un algorithme d'apprentissage profond à base de réseaux de neurones.

3. Procédé de compression selon l'une des revendications 1 ou 2, comportant en outre une segmentation complémentaire (70) appliquée à l'image numérique initiale (20), et une fusion (72) entre l'image segmentée par l'application d'une segmentation sémantique et l'image segmentée par ladite segmentation complémentaire, le résultat de la fusion étant utilisé pour l'obtention de l'image à coder.

4. Procédé de compression selon la revendication 3, dans lequel ladite segmentation complémentaire (70) est une segmentation basée contours.

5. Procédé de compression selon l'une quelconque des revendications 1 à 4, dans lequel l'obtention d'une image à coder comporte l'attribution d'une même valeur numérique de codage à tous les pixels de l'image segmentée appartenant à une même classe sémantique.

6. Procédé de compression selon à la revendication 5, dans lequel, pour au moins un sous-ensemble de pixels appartenant à une même classe sémantique, la valeur numérique initiale des pixels spatialement correspondants de l'image numérique initiale est recopiée de l'image numérique initiale dans l'image à coder.

7. Procédé de décompression d'images numériques compressées par un procédé de compression conforme aux revendications 1 à 6, mis en œuvre par un dispositif programmable de décompression (6) comportant au moins un processeur (34) et une mémoire électronique (32), **caractérisé en ce qu'**il comporte des étapes mises en œuvre par ledit processeur (34), de réception d'un train binaire et décompression (80) dudit train binaire pour obtenir une image numérique décodée, comportant au moins un ensemble de pixels de même valeur associée à une classe sémantique parmi un ensemble de classes sémantiques prédéterminé préalablement mémorisé.

8. Procédé de décompression selon la revendication 7, comportant en outre une étape de rendu (86) d'image décodée texturée, dans laquelle, pour au moins un sous-ensemble de pixels associés à une classe sémantique, une attribution de nouvelles valeurs numériques aux pixels dudit sous-ensemble est effectuée en fonction de ladite classe sémantique.

9. Procédé de décompression selon la revendication 8, dans lequel l'étape de rendu (86) d'image décodée texturée met en œuvre un algorithme de génération d'images basé sur des réseaux de neurones.

10. Programme d'ordinateur comportant des instructions logicielles qui, lorsqu'elles sont mises en œuvre par un dispositif électronique programmable, mettent en œuvre un procédé de compression d'images numériques conforme aux revendications 1 à 6.

11. Programme d'ordinateur comportant des instructions logicielles qui, lorsqu'elles sont mises en œuvre par un dispositif électronique programmable, mettent en œuvre un procédé de décompression d'images numériques conforme aux revendications 7 à 9.

12. Dispositif de compression d'images numériques, une image numérique initiale à compresser étant définie par au moins une matrice de pixels ayant des valeurs numériques associées, le dispositif de compression (4) étant un dispositif programmable comportant au moins un processeur (16) et une mémoire électronique (14), **caractérisé en ce que** ledit processeur (16) est configuré pour mettre en œuvre :
- un module (22) de segmentation sémantique configuré pour appliquer une segmentation sémantique à l'image numérique initiale (20), permettant d'obtenir une image segmentée dans laquelle chaque pixel est associé à une classe sémantique parmi un ensemble de classes sémantiques (18) prédéterminé préalablement mémorisé,
- un module (24) d'obtention d'une image à coder à partir de ladite image segmentée,
- un module de compression (26) de l'image à coder et d'obtention d'un train binaire (30).

13. Dispositif de décompression d'images numériques compressées par un dispositif de compression d'images numériques selon la revendication 12, ledit dispositif de décompression (6) étant un dispositif programmable comportant au moins un processeur (34) et une mémoire électronique (32), ledit processeur étant **caractérisé en ce qu'**il est configuré pour mettre en œuvre un module de réception d'un train binaire et un module de décompression (36) configuré pour appliquer un algorithme de décompression dudit train binaire pour obtenir une image numérique décodée, comportant au moins un ensemble de pixels de même valeur associée à une classe sémantique parmi un ensemble de classes sémantiques prédéterminé préalablement mémorisé.
